# EUROPÄISCHE PATENTSCHRIFT

(11) **EP 3 007 960 B1**
(45) Veröffentlichungstag und Bekanntmachung des Hinweises auf die Patenterteilung: **14.03.2018**
(21) Anmeldenummer: 14724665.6
(22) Anmeldetag: 02.05.2014
(51) Int. Cl.: B62D 25/02, B62D 25/04, B62D 29/00, B29C 70/86, B29C 43/00

(54) **SEITENWANDGRUPPE FÜR PERSONENKRAFTWAGEN**
SIDE WALL GROUP FOR PASSENGER VEHICLES
ENSEMBLE PAROI LATÉRALE POUR VOITURES PARTICULIÈRES

(30) Priorität: 12.06.2013 DE 102013106070
(43) Veröffentlichungstag der Anmeldung: 20.04.2016
(73) Patentinhaber: ThyssenKrupp Steel Europe AG, 47166 Duisburg (DE); Technische Universität Dresden, 01069 Dresden (DE); Leichtbau-Zentrum Sachsen GmbH, 01307 Dresden (DE)
(72) Erfinder: PATBERG, Lothar, 47445 Moers (DE); MAYER, Stefan, 58239 Schwerte (DE); KRAHNERT, Torsten, 14554 Seddin (DE); HUFENBACH, Werner, 01324 Dresden (DE); LADUSCH, Enrico, 01187 Dresden (DE); Werner, Jens, 01640 Coswig (DE); KIEßLING, André, 01307 Dresden (DE); HERBIG, Alexander, 01324 Dresden (DE); KIELE, Jörn, 01099 Dresden (DE); LEPPER, Martin, 01279 Dresden (DE)
(74) Vertreter: Cohausz & Florack
(86) Internationale Anmeldenummer: PCT/EP2014/059007
(87) Internationale Veröffentlichungsnummer: WO 2014/198455

(56) Entgegenhaltungen:
- EP-A1- 1 052 164
- EP-A1- 2 457 808
- DE-A1-102007 053 353

## Beschreibung

Die Erfindung betrifft eine Seitenwandgruppe für einen Personenkraftwagen (PKW), insbesondere elektrobetriebenen PKW, mit einer B-Säule aus faserverstärktem Kunststoff, mindestens einer weiteren in Heckrichtung nachfolgenden Säule aus faserverstärktem Kunststoff und einer einen Abschnitt der Außenhaut des Personenkraftwagens definierenden Seitenwand aus faserverstärktem Kunststoff, wobei die B-Säule eine Hohlsäule aus Metall als Kernelement aufweist.

Eine derartige Seitenwandgruppe ist aus der EP 2 457 808 A1 bekannt.

Die Automobilindustrie ist seit längerem bestrebt, leichtere Karosseriebauteile mit vergleichbaren oder verbesserten mechanischen Eigenschaften kostengünstig herzustellen. Dieser Entwicklung liegt die Zielsetzung eines geringeren Kraftstoffverbrauchs bzw. verminderter Schadstoffemissionen, insbesondere von CO₂, zugrunde. Leichten Karosseriebauteilen mit gutem Crashverhalten kommt insbesondere auch hinsichtlich Elektrofahrzeugen eine hohe Bedeutung zu, wenn es darum geht, die Reichweite und/oder Beschleunigungswerte solcher Fahrzeuge zu verbessern.

Konventionelle tragende Karosseriebauteile wie zum Beispiel eine Seitenwandgruppe einer Fahrgastzelle eines PKW's sind aus einer Vielzahl von Einzelteilen zusammengesetzt. Beispielsweise werden A-, B-, C- und D-Säule, Dachrahmen, Außenhaut und weitere Bauteile aus einer Vielzahl einzelner Schalen zu einer Seitenwandgruppe durch Schweißen oder Kleben gefügt. Die Seitenwandgruppe ist eine partiell tragende Struktur und muss daher auch die Anforderungen hinsichtlich Steifigkeit und Crashverhalten, insbesondere hinsichtlich eines Seitenaufpralls und Fahrzeugüberschlags erfüllen. Aus diesem Grund werden aktuell vorwiegend aus Stahl oder Aluminium bestehende Tragstrukturen für Seitenwandgruppen verwendet. Konventionelle Seitenwandgruppen sind beispielsweise aus mehr als 60 Einzelteilen aufgebaut und werden mittels Schweiß-, Niet-, Kleb- und/oder Schraubverbindungen in einer Vielzahl von Fertigungsschritten mit hohem Arbeitsaufwand gefügt. Ferner sind auch kleinere Seitenwandabschnitte von Seitenwandgruppen bekannt, die aus Kunststoff hergestellt sind. Diese Teile werden typischerweise in einem SMC (Sheet Moulding Compound)-Verfahren hergestellt. Sie sind, bedingt durch das Herstellungsverfahren, als Halbschalenelemente gefertigt und werden durch Kleben gefügt. Zur Erhöhung der Steifigkeit und der Festigkeit sind diese Kunststoffteile im Schalenhohlraumbereich zusätzlich verrippt (vgl. Karosserietechnik, Horst Pippert, Vogel Buchverlag, 1998, S. 269). Solche Seitenwandabschnitte besitzen aufgrund der ungerichteten Verstärkungsfasern einen relativ geringen Leichtbaugrad bezüglich Steifigkeit und Festigkeit. Zudem besitzen sie aufgrund des Schwundes des Matrixmaterials ein unbefriedigendes Aussehen und bedürfen üblicherweise einer Nachbesserung vor der Lackierung.

Aus der EP 1 052 164 A1 ist eine Seitenwandgruppe für PKW's aus faserverstärktem Kunststoff bekannt, die als Formteil in einem RTM-Verfahren (Resin Transfer Moulding) hergestellt ist, wobei der faserverstärkte Kunststoff einen Faservolumengehalt zwischen 30% und 60% aufweist. Die strukturell tragenden Abschnitte der Seitenwandgruppe, insbesondere die B-Säule, sind dabei in Sandwichbauweise als teilweise oder vollständig mit einem Stützkern aus Schaumstoff gefüllter Hohlkörper und die strukturell nicht-tragenden Abschnitte in Hohlraumbauweise als Hohlkörper gefertigt. Zur Herstellung einer solchen Seitenwandgruppe werden textile Flächengebilde als Vorformlinge hergestellt und in eine RTM-Werkzeugform gelegt, so dass im Bereich der Sandwichstrukturen ein oder mehrere Vorformlinge einen Schaumstoffkern umhüllen. Im Bereich der Hohlraumstrukturen werden dagegen ausschmelzbare Schmelzkerne in die RTM-Werkzeugform eingelegt und mit einem oder mehreren Vorformlingen umhüllt. Nach Schließen der Werkzeugform wird ein Harz, beispielsweise ein Epoxid-Harzsystem, in die Form injiziert und nach Abschluss des Injiziervorganges das Formteil gehärtet. Diese bekannte Seitenwandgruppe ist hinsichtlich ihrer Steifigkeit, ihres Crashverhaltens und einer kostengünstigen Fertigung verbesserungsfähig.

Der vorliegenden Erfindung lag die Aufgabe zugrunde, eine Seitenwandgruppe der eingangs genannten Art zu schaffen, die bei geringem Gewicht eine hohe Steifigkeit zur Aufnahme von Betriebs- sowie Crashlasten aufweist, eine anspruchsvolle Oberflächenqualität besitzt und kostengünstig mit geringen Fertigungszeiten hergestellt werden kann.

Gelöst wird diese Aufgabe durch eine Seitenwandgruppe mit den Merkmalen des Anspruchs 1. Bevorzugte und vorteilhafte Ausgestaltungen der erfindungsgemäßen Seitenwandgruppe sind Gegenstand der von Anspruch 1 abhängigen Unteransprüche.

Die erfindungsgemäße Seitenwandgruppe umfasst eine B-Säule aus faserverstärktem Kunststoff, mindestens eine weitere in Heckrichtung nachfolgende Säule aus faserverstärktem Kunststoff und eine einen Abschnitt der Außenhaut des PKW's definierende Seitenwand aus faserverstärktem Kunststoff, wobei die B-Säule eine Hohlsäule aus Metall als Kernelement aufweist, und wobei die mindestens eine weitere Säule einen Stützkern aus Kunststoff, vorzugsweise geschäumten Kunststoff aufweist.

Die B-Säule der erfindungsgemäßen Seitenwandgruppe ist somit als Hybrid-Element aus einer Hohlsäule aus Metall, vorzugsweise Stahl, insbesondere gehärtetem Bor-Mangan-Stahl, oder Leichtmetall, beispielsweise Aluminium, Magnesium oder Titan, und einem die metallische Hohlsäule ummantelnden, faserverstärkten Kunststoff ausgeführt. Die Hybrid-B-Säule verleiht der erfindungsgemäßen Seitenwandgruppe bei geringem Gewicht eine hohe Steifigkeit zur Aufnahme von Betriebs- sowie Crashlasten. Vorzugsweise besteht die metallische Hohlsäule der Hybrid-B-Säule aus partiell gehärtetem Stahl, wobei ein mittlerer Längenabschnitt der Hohlsäule eine höhere Zugfestigkeit als das Fußende und/oder das Kopfende der Hohlsäule besitzt. Insbesondere lässt sich an der metallischen Hohlsäule ein Sicherheitsgurt optimal anbinden, indem die Hohlsäule beispielsweise mit einer Gewindebohrung für eine Befestigungsschraube versehen wird. Die Integration (Einbettung) eines zusätzlichen Einlegers als Sicherheitsgurt-Anbindungselements, wie es bei der aus der EP 1 052 164 A1 bekannten Seitenwandgruppe erforderlich sein dürfte, ist bei der erfindungsgemäßen Seitenwandgruppe überflüssig. Dadurch lassen sich zudem kurze Fertigungszeiten sowie relativ geringe Produktionskosten realisieren. Neben der Hybrid-B-Säule trägt die weitere Säule aus faserverstärktem Kunststoff, die einen Stützkern aus Kunststoff geringer Dichte, vorzugsweise geschäumtem Kunststoff, aufweist, zur Erzielung einer hohen Karosseriesteifigkeit zur Aufnahme von Betriebssowie Crashlasten bei zugleich geringem Bauteilgewicht bei.

Eine bevorzugte Ausgestaltung der erfindungsgemäßen Seitenwandgruppe ist dadurch gekennzeichnet, dass der Stützkern der weiteren Säule und/oder die metallische Hohlsäule der B-Säule jeweils mit einem aus Fasern (Verstärkungsfasern) gebildeten Gewebe, Gelege oder Geflecht ummantelt sind. Hierdurch lässt sich die Steifigkeit der Seitenwandgruppe bei geringem Bauteilgewicht in unterschiedlichen Belastungsrichtungen gemeinsam optimieren. Besonders bevorzugt wird dabei das Gewebe, Gelege oder Geflecht schlauchförmig und nahtlos ausgebildet. Hierdurch lässt sich mit relativ geringem Fasermaterialeinsatz eine hohe Bauteilsteifigkeit erzielen. Ferner kann bei dieser Ausgestaltung ein zusätzlicher Fertigungsschritt zur Herstellung eines hohlkanalförmigen Vorformlings aus einem flächigen Geflecht bzw. flächigem Gewebe entfallen. Denn das schlauchförmige, nahtlose Gewebe bzw. Geflecht definiert bereits einen optimalen Vorformling.

Bei den zur Verstärkung des Kunststoffs der erfindungsgemäßen Seitenwandgruppe verwendeten Fasern handelt es sich beispielsweise um anorganische Fasern, wie Glasfasern, Kohlenstoff- oder Graphitfasern, keramische Fasern, metallische Fasern oder Metalldraht, Kunststofffasern, Naturfasern und/oder daraus gebildete Mischfasern. Besonders bevorzugt werden zur Herstellung der erfindungsgemäßen Seitenwandgruppe Glas- und/oder Kohlenstofffasern als Verstärkungsfasern verwendet.

Die Verstärkungsfasern bzw. das daraus gebildete Gewebe, Gelege oder Geflecht werden in einem Matrixmaterial aus thermoplastischem oder duroplastischem Kunststoff eingebettet. Dies erfolgt beispielsweise mittels eines Infiltrationsverfahrens unter Verwendung eines entsprechenden Formwerkzeuges (Infiltrationswerkzeuges). Dementsprechend sind nach einer bevorzugten Ausgestaltung der erfindungsgemäßen Seitenwandgruppe deren die B-Säule, die mindestens eine weitere Säule und die Seitenwand mittels eines Infiltrationsverfahrens hergestellt. Ebenso kann eine Thermoplast verarbeitende Vorrichtung, wie beispielsweise eine Thermoplastpresse, verwendet werden. Hier wird vorzugsweise ein Hybridgarn in den Verstärkungstextilien verwendet, wie beispielsweise Verstärkungsfasern in Form von vorzugsweise Kohlenstofffasern in thermoplastischer Matrix.

Eine weitere bevorzugte Ausgestaltung der erfindungsgemäßen Seitenwandgruppe ist dadurch gekennzeichnet, dass die B-Säule und die mindestens eine weitere Säule durch die Seitenwand miteinander verbunden sind. Mit solchen Seitenwandgruppen lässt sich in vorteilhafter Weise die Karosserie eines als Coupe, insbesondere zweitürigen Sportwagen, ausgeführten PKWs herstellen.

Die B-Säule und/oder die mindestens eine weitere Säule können mit der Seitenwand stoffschlüssig verbunden, beispielsweise verklebt sein. In diesem Fall werden die B-Säule und/oder die mindestens eine weitere Säule mit der davon getrennt gefertigten Seitenwand (Außenhaut) in einem nachfolgenden Arbeitsschritt stoffschlüssig verbunden bzw. verklebt.

Nach einer alternativen, besonders bevorzugten Ausgestaltung der erfindungsgemäßen Seitenwandgruppe sind jedoch die B-Säule und/oder die mindestens eine weitere Säule einstückig mit der Seitenwand ausgebildet. Hierzu werden die metallische Hohlsäule und/oder der aus Kunststoff, insbesondere geschäumtem Kunststoff, gebildete Stützkern, vorzugsweise jeweils in einer schlauchförmigen Fasergeflecht- oder Fasergewebeummantelung, zusammen mit einem textilen Flächengebilde oder Geflecht aus den oben genannten Verstärkungsfasern in ein Formwerkzeug, insbesondere Infiltrationswerkzeug, eingelegt und mit fließfähigem, thermoplastischen oder duroplastischen Kunststoff infiltriert, beispielsweise umspritzt.

Nach einer weiteren, oben bereits angesprochenen Ausgestaltung ist an der metallischen Hohlsäule der B-Säule (Hybrid-B-Säule) mindestens ein Befestigungsmittel zur Anbindung eines Sicherheitsgurts unmittelbar angebracht oder ausgebildet, oder kann in einem weiteren Arbeitsschritt stoffschlüssig, z.B. mittels Punktschweißen, an die metallische Hohlsäule angebunden werden.

Des Weiteren können in der erfindungsgemäßen Seitenwandgruppe ein oder mehrere Anbindungselemente zur Anbindung angrenzender Bauteile, beispielsweise eines Dachrahmenteils (Dachlängsträgers) oder Dachquerträgers, integriert sein. Das mindestens eine Anbindungselement oder mindestens eines der Anbindungselemente kann dabei durch einen Einleger definiert bzw. als solcher ausgebildet sein. Der Einleger stellt dabei ein Knotenelement dar und ist vorzugsweise als Spritzgießteil, insbesondere als Aluminiumguss-Konstruktion, ausgeführt. Das Knotenelement ist beispielsweise mit der Hybrid-B-Säule verbunden.

In weiterer Ausgestaltung der erfindungsgemäßen Seitenwandgruppe ist vorgesehen, dass die B-Säule und/oder die mindestens eine weitere Säule mit einem Längenabschnitt gegenüber der Unterkante der Seitenwand überstehen. Der überstehende Längenabschnitt der B-Säule bzw. weiteren Säule kann somit vorteilhaft als Anbindungsstelle für ein benachbartes Karosserieteil, beispielsweise einen Türschweller, eine Heckschürze oder Heckstoßstange, genutzt werden.

Nach einer weiteren bevorzugten Ausgestaltung der erfindungsgemäßen Seitenwandgruppe weist deren Seitenwand mehrere mit ihr einstückig ausgebildete Funktionsflächen auf, die gegenüber einer ihre Außenseite berührenden Tangentialebene zurückspringend angeordnet sind. Bei diesen Funktionsflächen handelt es sich beispielsweise um einen Lampentopf, die Dichtfläche der Fahrzeugtür, die Anbindungsfläche für ein Türschlossteil, die Dichtfläche einer Seitenscheibe und/oder die Dichtfläche einer Heckklappe.

Eine weitere vorteilhafte Ausgestaltung der erfindungsgemäßen Seitenwandgruppe ist dadurch gekennzeichnet, dass die Seitenwand in Sandwichbauweise ausgeführt. Ferner kann sie mindestens ein schalldämpfendes Flächenelement aufweisen, das in ihrem Querschnitt integriert oder an ihrer Innenseite angebracht ist.

Nachfolgend wird die Erfindung anhand einer mehrere Ausführungsbeispiele darstellenden Zeichnung näher erläutert. Es zeigen schematisch:
- Fig. 1: eine erfindungsgemäße Seitenwandgruppe in Seitenansicht (Außenansicht);
- Fig. 2: die Seitenwandgruppe der Fig. 1 in Heckansicht;
- Fig. 3: eine Innenansicht der Seitenwandgruppe der Fig. 1;
- Fig. 4: eine vereinfachte, vergrößerte Schnittansicht entlang der Schnittlinie A-A in Fig. 3;
- Fig. 5 und Fig. 6: eine Vorrichtung zum Ummanteln eines Stützkerns oder metallischen Hohlträgers (Hohlsäule) mit Verstärkungsfasern, in einer Vorderansicht bzw. einer Seitenansicht;
- Fig. 7: ein Infiltrationswerkzeug zur Herstellung einer erfindungsgemäßen Seitenwandgruppe in Schnittansicht, wobei das Werkzeug geöffnet ist und mit einem textilen Flächengebilde aus Verstärkungsfasern, einem mit Verstärkungsfasern ummantelten, säulenförmigen Stützkern aus Kunststoff und einem mit Verstärkungsfasern ummantelten, säulenförmigen metallischen Hohlträger beschickt wird;
- Fig. 8: das Infiltrationswerkzeug gemäß Fig. 7 in geschlossenem Zustand während des Infiltrationsvorgangs; und
- Fig. 9: das Infiltrationswerkzeug gemäß Fig. 7 in geöffnetem Zustand, wobei die fertige Seitenwandgruppe aus dem Werkzeug entnommen wird.

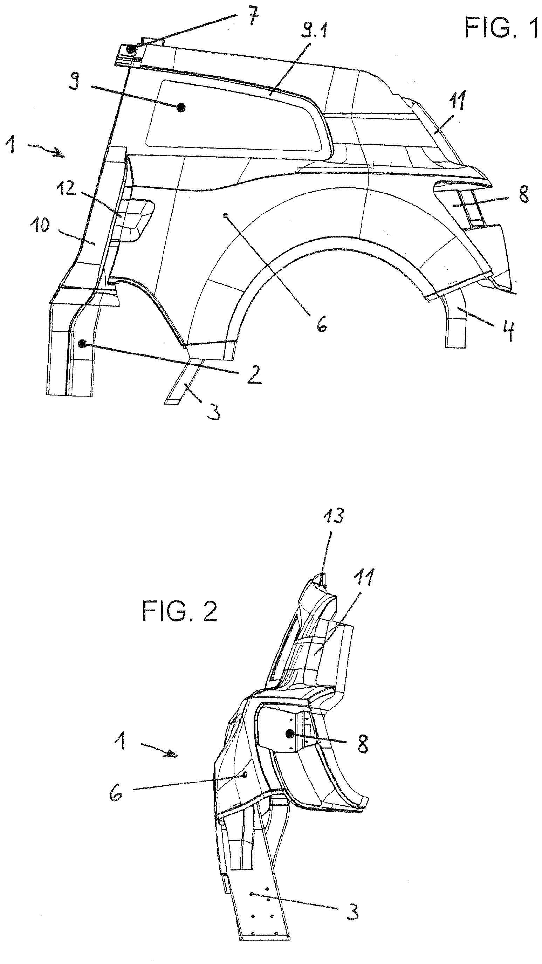

Die in den Figuren 1 bis 4 gezeigte Seitenwandgruppe 1 ist aus einer B-Säule 2, einer C-Säule 3, einer D-Säule 4, einem Dachlängsträger 5 und einer eine Seitenwand 6 definierenden Außenhautschale aufgebaut. Die Säulen 2-4, der Dachlängsträger 5 und die Seitenwand (Außenhautschale) 6 sind jeweils aus faserverstärktem Kunststoff hergestellt, wobei die B-Säule 2 eine Hohlsäule 2.1 aus Metall enthält, die von faserverstärktem Kunststoff ummantelt ist. Die B-Säule 2 kann somit auch als Hybrid-B-Säule bezeichnet werden. Die Hohlsäule 2.1 ist beispielsweise aus Leichmetall, insbesondere Aluminium, oder Stahl, vorzugsweise partiell gehärtetem Stahl gefertigt. Mindestens eine der weiteren Säulen, insbesondere die C-Säule 3, oder vorzugsweise auch die D-Säule 4 und/oder der Dachlängsträger 5 weisen einen säulenförmigen Stützkern 3.1, 4.1 bzw. 5.1 aus Kunststoff niedriger Dichte auf. Vorzugsweise besteht der jeweilige Stützkern 3.1, 4.1, 5.1 aus geschäumtem Kunststoff, beispielsweise aus geschlossenzelligem Hartschaum oder Integralschaum. Der Stützkern 3.1, 4.1, 5.1 ist mit mindestens einer Schicht 3.2, 4.2, 5.2 aus einem faserverstärkten Kunststoff überzogen. Ebenso ist auch die metallische Hohlsäule 2.1 mit mindestens einer Schicht 2.2 aus einem faserverstärkten Kunststoff überzogen.

Die Verstärkungsfasern, bei denen es vorzugsweise um Glas- und/oder Kohlenstofffasern handelt, liegen in Form eines Textils vor. Das Textil ist als Geflecht, Gelege oder Gewebe ausgebildet und in die aus thermoplastischem oder duroplastischem Kunststoff gebildete Matrix eingebettet. Die faser- bzw. textilverstärkte Kunststoffschicht 2.2, 3.2, 4.2 oder 5.2 besitzt eine Schichtdicke von beispielsweise ca. 4 mm.

Die Seitenwand (Außenhautschale) 6 enthält ebenfalls ein Textil aus Verstärkungsfasern, vorzugsweise Glas- und/oder Kohlenstofffasern. Das Textil ist beispielsweise als Gewebe, Gelege, Geflecht oder Vlies ausgebildet und wiederum in eine Matrix aus thermoplastischem oder duroplastischem Kunststoff eingebettet. Die faser- bzw. textilverstärkte Seitenwand 6 besitzt eine Dicke von beispielsweise ca. 1 mm.

Die Faserverstärkung der Seitenwand 6, Hybrid-B-Säule 2 sowie der anderen Säulen/Träger 3, 4, 5 ist jeweils aus einer oder mehreren Lagen des genannten Textils aufgebaut. Der das Textil enthaltende Kunststoff der Seitenwand 6, Hybrid-B-Säule 2 sowie der anderen Säulen/Träger 3, 4, 5 ist vorzugsweise einstückig ausgebildet. Die Seitenwandgruppe 1 ist somit ein integrales Karosseriebauteil.

In der Seitenwandgruppe 1 sind ein oder mehrere Anbindungselemente zur Anbindung angrenzender Bauteile integriert. Beispielsweise weist die Seitenwandgruppe 1 ein Knotenelement (Anbindungselement) 7 zur Anbindung eines Dachquerträgers (nicht gezeigt) auf. Das Knotenelement 7 ist vorzugsweise als Aluminiumgussteil ausgeführt und stoffschlüssig beispielsweise mit der Hybrid-B-Säule 2 verbunden.

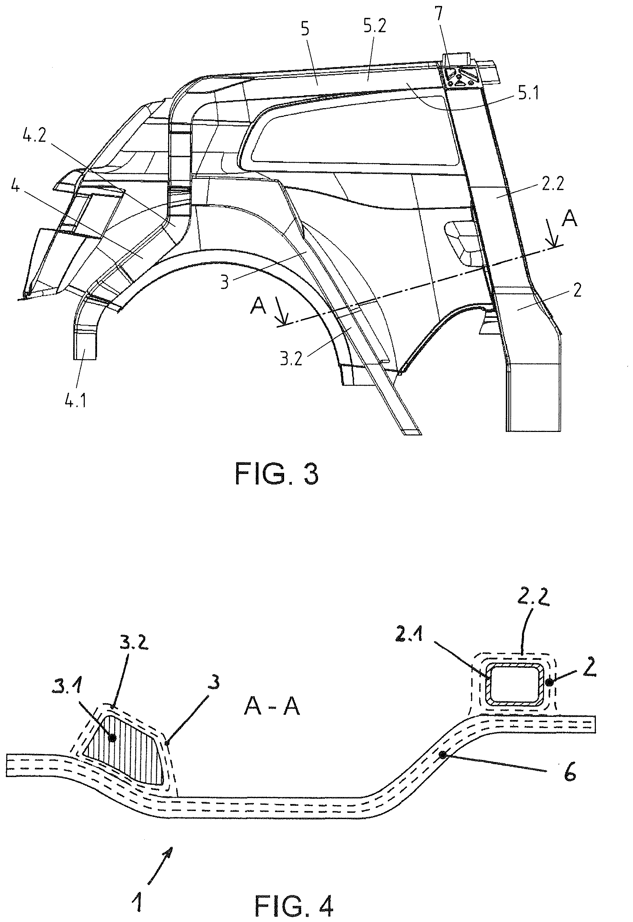

Des Weiteren weist die Seitenwandgruppe 1 mehrere integrale Funktionsflächen auf, die in die Seitenwand (Außenhautschale) 6 eingeformt sind. Die Funktionsflächen sind vorzugsweise gegenüber einer die Außenseite der Seitenwand (Außenhautschale) 6 berührenden Tangentialebene zurückspringend angeordnet. Die in die Seitenwandgruppe 1 integrierten Funktionsflächen definieren beispielsweise einen Lampentopf 8, eine umlaufende Dichtfläche oder Klebefläche 9.1 für eine Seitenscheibe an einer Fensteröffnung 9, eine Dichtfläche 10, 11 für eine Fahrzeugtür bzw. eine Heckklappe, eine Anbindungsfläche 12 für ein Türschlosselement, beispielsweise einen Türfanghaken, und/oder Abstellflächen 13 für benachbarte Karosseriebauteile, z.B. eine Dachhautschale, einen Türschweller oder eine Heckstoßstangenverkleidung. Insbesondere in den Figuren 1 und 3 ist zu erkennen, dass die Hybrid-B-Säule 2 sowie die C-Säule 3 und die D-Säule 4 mit einem unteren Längenabschnitt gegenüber der Unterkante der Seitenwand 6 überstehen.

Die in den Figuren 1 bis 4 gezeigte Seitenwandgruppe 1 kann mittels eines Infiltrationsverfahrens in einem Prozessschritt hergestellt werden.

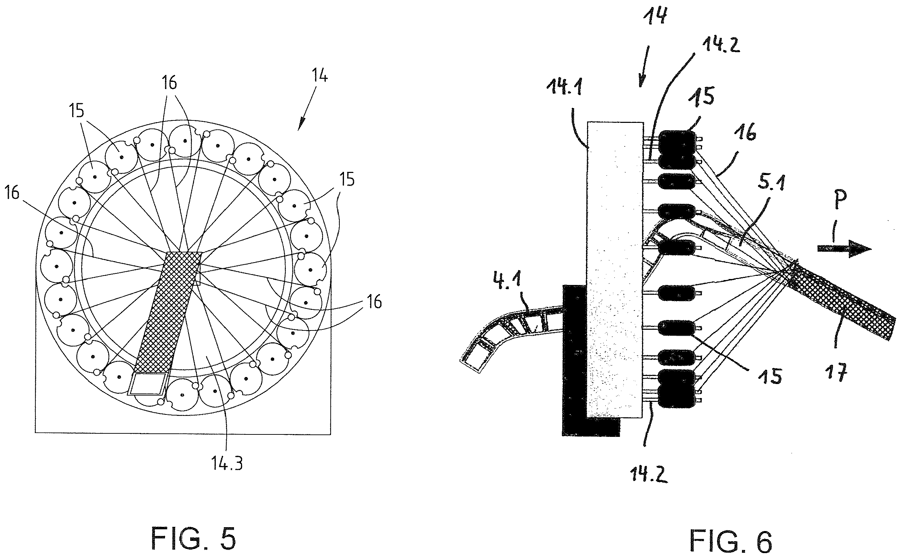

In den Figuren 5 und 6 ist eine Vorrichtung 14 in Form eines sogenannten Flechtrades zum Ummanteln eines Stützkerns 3,1, 4.1, 5.1 oder metallischen Hohlträgers (Hohlsäule) 2.1 mit Verstärkungsfasern dargestellt. Die Verstärkungsfasern, vorzugsweise Glas- und/oder Kohlenstofffasern, werden hierzu in Form von auf Spulen 15 aufgewickelten Rovings oder Fäden 16 bereitgestellt. Die Vorrichtung weist einen angetriebenen Drehkranz 14.1 mit einer Vielzahl von Stiften (Dornen) 14.2 auf, auf denen die Spulen 15 drehbar gehalten sind. Der zu ummantelnde Stützkern 4.1, 5.1 (oder 3.1 oder metallische Hohlträger 2.1) wird durch die von dem Drehkranz 14.1 definierte Durchgangsöffnung 14.3 in Richtung des Pfeils P bewegt, wobei gleichzeitig der Drehkranz 14.1 mit den daran drehbar gehaltenen Spulen 15 gedreht wird. Auf diese Weise wird der Stützkern 4.1, 5.1 (3.1 oder metallische Hohlträger 2.1) mit einem schlauchförmigen Geflecht oder Gewebe 17 ummantelt. Das so erzeugte schlauchförmige Gewebe oder Geflecht 17 ist nahtlos ausgebildet. In Fig. 6 ist zu erkennen, dass ein aus Schaumstoff hergestellter Stützkern 5.1,4.1, der im Wesentlichen die Form der D-Säule 4 und des Dachlängsträgers 5 der in den Figuren 1 bis 4 gezeigten Seitenwandgruppe aufweist, mit Verstärkungsfasern (Verstärkungsfäden 16) überflochten wird. In entsprechender Weise werden auch der Stützkern (Schaumstoffkern) 3.1 für die C-Säule 3 und die metallische Hohlsäule 2.1 für die Hybrid-B-Säule 2 mit Verstärkungsfasern (Verstärkungsfäden 16) überflochten.

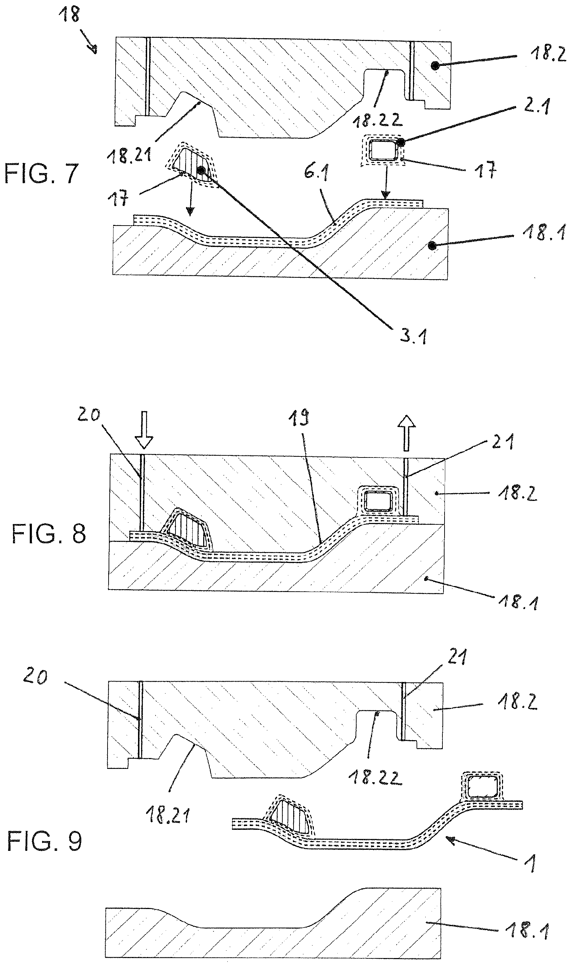

Anschließend werden die mit dem jeweiligen Verstärkungsfasergeflecht 17 ummantelten Stützkerne/Stützträger 3.1, 4.1, 5.1 und die entsprechend ummantelte metallische Hohlsäule 2.1 zusammen mit mindestens einer Lage eines textilen Vorfomlings oder Flächengebildes 6.1 aus Verstärkungsfasern in ein Infiltrationswerkzeug eingelegt (siehe Fig. 7). Gegebenenfalls können ein oder mehrere weitere Anbindungsteile als Einleger, z.B. ein Knotenelement 7 zur Anbindung eines Dachquerträgers, in das Infiltrationswerkzeug 18 eingelegt werden. Das Infiltrationswerkzeug 18 umfasst mindestens ein Unterwerkzeug 18.1 und mindestens ein Oberwerkzeug 18.2, die im geschlossenen Zustand des Infiltrationswerkzeugs 18 eine Kavität 19 definieren, welche im Wesentlichen der Form der herzustellenden Seitenwandgruppe 1 entspricht.

In dem in den Figuren 7 bis 9 gezeigten Ausführungsbeispiel sind in der Formfläche des Oberwerkzeuges 18.2 Ausnehmungen 18.21, 18.22 ausgebildet, die der Aufnahme der mit Fasergeflecht ummantelten Hohlsäule 2.1 für die Hybrid-B-Säule bzw. des mit Fasergeflecht ummantelten Stützkerns (Schaumkerns) 3.1 für die C-Säule dienen. Zudem weist das Oberwerkzeug 18.2 Ausnehmungen (nicht gezeigt) zur Aufnahme der mit Fasergeflecht ummantelten Stützkerne (Schaumkerne) 4.1, 5.1 für die D-Säule 4 und den Dachlängsträger 5 auf. Des Weiteren sind ein oder mehrere in die Kavität 19 mündende Kunststoffzufuhrkanäle 20 sowie mindestens ein an der Kavität angeschlossener Entlüftungskanal 21 vorgesehen. Über den Entlüftungskanal 21 kann in der Kavität 19 ein Vakuum angelegt werden, welches die Infiltration des textilen Flächengebildes 6.1 sowie des schlauchförmigen Geflechts 17 mit dem zunächst flüssigen Matrixmaterial (thermo- oder duroplastischer Kunststoff) unterstützt. Ferner ist das Infiltrationswerkzeug mit einer Temperiereinrichtung (nicht gezeigt) versehen, um die Aushärtung des in die Kavität injizierten Kunststoffs zu bewirken bzw. zu beschleunigen. Nach ausreichender Aushärtung des Kunststoffs wird das Infiltrationswerkzeug geöffnet und die fertige Seitenwandgruppe entnommen (siehe Fig. 9).

Die Ausführung der erfindungsgemäßen Seitenwandgruppe ist nicht auf die in der Zeichnung dargestellten Ausführungsbeispiele beschränkt. Vielmehr sind zahlreiche Varianten denkbar, die auch bei einer von der Zeichnung abweichenden Gestaltung von der in den beiliegenden Ansprüchen angegebenen Erfindung Gebrauch machen. So kann beispielsweise die aus der Hybrid-B-Säule 2 und der mindestens einen weiteren Säule 3 aufgebaute Trägerstruktur mit der Seitenwand (Außenhaut) 6 in einem nachfolgenden Arbeitsschritt verklebt werden.

## Patentansprüche

1. Seitenwandgruppe (1) für einen Personenkraftwagen, mit einer B-Säule (2) aus faserverstärktem Kunststoff, mindestens einer weiteren in Heckrichtung nachfolgenden Säule (3,4) aus faserverstärktem Kunststoff und einer einen Abschnitt der Außenhaut des Personenkraftwagens definierenden Seitenwand (6) aus faserverstärktem Kunststoff, wobei die B-Säule (2) eine Hohlsäule (2.1) aus Metall als Kernelement aufweist, **dadurch gekennzeichnet, dass** die mindestens eine weitere Säule (3,4) einen Stützkern (3.1,4.1) aus Kunststoff, vorzugsweise geschäumtem Kunststoff aufweist.

2. Seitenwandgruppe nach Anspruch 1, **dadurch gekennzeichnet, dass** der Stützkern (3.1, 4.1) mit einem aus Fasern gebildeten Gewebe, Gelege oder Geflecht (17) ummantelt ist.

3. Seitenwandgruppe nach Anspruch 1 oder 2, **dadurch gekennzeichnet, dass** die metallische Hohlsäule (2.1) der B-Säule (2) mit einem aus Fasern gebildeten Gewebe, Gelege oder Geflecht (17) ummantelt ist.

4. Seitenwandgruppe nach Anspruch 2 oder den Ansprüchen 2 und 3, **dadurch gekennzeichnet, dass** das Gewebe oder Geflecht (17) schlauchförmig und nahtlos ausgebildet ist.

5. Seitenwandgruppe nach einem der Ansprüche 1 bis 4, **dadurch gekennzeichnet, dass** die B-Säule (2) und die mindestens eine weitere Säule (3, 4) durch die Seitenwand (6) miteinander verbunden sind.

6. Seitenwandgruppe nach einem der Ansprüche 1 bis 5, **dadurch gekennzeichnet, dass** die B-Säule (2) und/oder die mindestens eine weitere Säule (3, 4) mit der Seitenwand (6) stoffschlüssig verbunden sind.

7. Seitenwandgruppe nach einem der Ansprüche 1 bis 6, **dadurch gekennzeichnet, dass** die B-Säule (2) und/oder die mindestens eine weitere Säule (3, 4) einstückig mit der Seitenwand (6) ausgebildet sind.

8. Seitenwandgruppe nach einem der Ansprüche 1 bis 7, **dadurch gekennzeichnet, dass** an der metallischen Hohlsäule (2.1) der B-Säule (2) mindestens ein Befestigungsmittel zur Anbindung eines Sicherheitsgurts unmittelbar angebracht oder ausgebildet ist.

9. Seitenwandgruppe nach einem der Ansprüche 1 bis 8, **dadurch gekennzeichnet, dass** darin ein oder mehrere Anbindungselemente (7) zur Anbindung angrenzender Bauteile integriert sind.

10. Seitenwandgruppe nach Anspruch 9, **dadurch gekennzeichnet, dass** das mindestens eine Anbindungselement (7) oder mindestens eines der Anbindungselemente durch einen Einleger definiert ist.

11. Seitenwandgruppe nach einem der Ansprüche 1 bis 10, **dadurch gekennzeichnet, dass** die Seitenwand (6) mehrere mit ihr einstückig ausgebildete Funktionsflächen (8, 9.1, 10,12,13) aufweist, die gegenüber einer ihre Außenseite berührenden Tangentialebene zurückspringend angeordnet sind.

12. Seitenwandgruppe nach einem der Ansprüche 1 bis 11, **dadurch gekennzeichnet, dass** die Seitenwand (6) mindestens ein schalldämpfendes Flächenelement aufweist, das in ihrem Querschnitt integriert oder an ihrer Innenseite angebracht ist.

13. Seitenwandgruppe nach einem der Ansprüche 1 bis 12, **dadurch gekennzeichnet, dass** die B-Säule (2), die mindestens eine weitere Säule (3, 4) und die Seitenwand (6) mittels eines Infiltrationsverfahrens hergestellt sind.

14. Seitenwandgruppe nach einem der Ansprüche 1 bis 13, **dadurch gekennzeichnet, dass** die B-Säule (2) und/oder die mindestens eine weitere Säule (3, 4) mit einem Längenabschnitt gegenüber der Unterkante der Seitenwand (6) überstehen.

## Claims

1. Side panel assembly (1) for a passenger vehicle, comprising a B-pillar (2) made of fibre-reinforced plastics material, at least one further pillar (3, 4) made of fibre-reinforced plastics material and following in the rear direction, and a side panel (6) made of fibre-reinforced plastics material and defining a portion of the skin of the passenger vehicle, wherein the B-pillar (2) comprises a hollow pillar (2.1) made of metal as a core element, **characterised in that** the at least one further pillar (3, 4) comprises a supporting core (3.1, 4.1) made of plastics material, preferably foamed plastics material.

2. Side panel assembly according to claim 1, **characterised in that** the supporting core (3.1,4.1) is encased in a woven, layered or braided fabric (17) formed of fibres.

3. Side panel assembly according to either claim 1 or claim 2, **characterised in that** the metallic hollow pillar (2.1) of the B-pillar (2) is encased in a woven, layered or braided fabric (17) formed of fibres.

4. Side panel assembly according to either claim 2 or claims 2 and 3, **characterised in that** the woven or braided fabric (17) is tubular and seamless.

5. Side panel assembly according to any of claims 1 to 4, **characterised in that** the B-pillar (2) and the at least one further pillar (3,4) are interconnected by means of the side panel (6).

6. Side panel assembly according to any of claims 1 to 5, **characterised in that** the B-pillar (2) and/or the at least one further pillar (3, 4) are integrally bonded to the side panel (6).

7. Side panel assembly according to any of claims 1 to 6, **characterised in that** the B-pillar (2) and/or the at least one further pillar (3, 4) are integrally formed with the side panel (6).

8. Side panel assembly according to any of claims 1 to 7, **characterised in that** at least one fastening means for attaching a seat belt is directly connected to or formed on the metallic hollow pillar (2.1) of the B-pillar (2).

9. Side panel assembly according to any of claims 1 to 8, **characterised in that** one or more attachment elements (7) for attaching adjacent components are integrated therein.

10. Side panel assembly according to claim 9, **characterised in that** the at least one attachment element (7) or at least one of the attachment elements is defined by an insertion element.

11. Side panel assembly according to any of claims 1 to 10, **characterised in that** the side panel (6) comprises a plurality of functional surfaces (8, 9.1, 10, 12, 13) integrally formed therewith, which surfaces are arranged so as to be set back with respect to a tangential plane adjoining the outside thereof.

12. Side panel assembly according to any of claims 1 to 11, **characterised in that** the side panel (6) comprises at least one sound absorbing surface element which is integrated in the cross section thereof or attached to the inside thereof.

13. Side panel assembly according to any of claims 1 to 12, **characterised in that** B-pillar (2), the at least one further pillar (3, 4) and the side panel (6) are produced by means of an infiltration process.

14. Side panel assembly according to any of claims 1 to 13, **characterised in that** a longitudinal portion of the B-pillar (2) and/or a longitudinal portion of the at least one further pillar (3, 4) protrude with respect to the bottom edge of the side panel (6).

## Revendications

1. Ensemble paroi latérale pour véhicule automobile personnel, avec un montant B (2) en une matière plastique renforcée par fibres, au moins un autre montant arrière (3, 4) en une matière plastique renforcée par fibres, et une paroi latérale (6) en une matière plastique renforcée par fibres, définissant une partie de la carrosserie du véhicule automobile, le montant B (2) ayant un montant creux (2.1) en métal comme élément essentiel, **caractérisé en ce que** le au moins un autre montant (3, 4) présente un noyau d'appui (3.1, 4.1) en matière plastique, de préférence une matière plastique moussée.

2. Ensemble paroi latérale selon la revendication 1, **caractérisé en ce que** le noyau d'appui (3.1, 4.1) est revêtu d'un tissu, d'une nappe ou d'un lacis de fibres (17).

3. Ensemble paroi latérale selon la revendication 1 ou 2, **caractérisé en ce que** le montant métallique creux (2.1) du montant B (2) est revêtu d'un tissu, d'une nappe ou d'un lacis de fibres (17).

4. Ensemble paroi latérale selon la revendication 2 ou les revendications 2 et 3, **caractérisé en ce que** le tissu ou le lacis (17) est circulaire et sans couture.

5. Ensemble paroi latérale selon l'une des revendications 1 à 4, **caractérisé en ce que** le montant B (2) et le au moins un autre montant (3, 4) sont reliés l'un à l'autre par la paroi latérale (6).

6. Ensemble paroi latérale selon l'une des revendications 1 à 5, **caractérisé en ce que** le montant B (2) et/ou le au moins un autre montant (3, 4) sont reliés par combinaison de matières.

7. Ensemble paroi latérale selon l'une des revendications 1 à 6, **caractérisé en ce que** le montant B (2) et le au moins un autre montant (3, 4) ne forment qu'une pièce avec la paroi latérale.

8. Ensemble paroi latérale selon l'une des revendications 1 à 7, **caractérisé en ce qu'**au moins un moyen de fixation pour le raccordement d'une ceinture de sécurité est appliqué ou formé sur le montant métallique creux (2.1) du montant B (2).

9. Ensemble paroi latérale selon l'une des revendications 1 à 8, **caractérisé en ce qu'**un ou plusieurs éléments de raccordement (7) y sont intégrés pour le raccordement de pièces de bordure.

10. Ensemble paroi latérale selon la revendication 9, **caractérisé en ce que** le au moins un élément de raccordement (7) ou au moins un des éléments de raccordement est défini par un insert.

11. Ensemble paroi latérale selon l'une des revendications 1 à 10, **caractérisé en ce que** la paroi latéral (6) présente plusieurs surfaces fonctionnelles (8, 9.1, 10, 12, 13) faisant partie intégrante de celle-ci, qui sont agencées en retrait par rapport à un plan tangentiel reposant sur sa face extérieure.

12. Ensemble paroi latérale selon l'une des revendications 1 à 11, **caractérisé en ce que** la paroi latérale (6) présente au moins un élément isolant acoustique, qui est intégré dans sa coupe transversale ou appliqué sur sa face intérieure.

13. Ensemble paroi latérale selon l'une des revendications 1 à 12, **caractérisé en ce que** le montant B (2), le au moins un autre montant (3, 4) et la paroi latérale sont préparés par un procédé d'infiltration.

14. Ensemble paroi latérale selon l'une des revendications 1 à 13, **caractérisé en ce que** le montant B (2) et/ou le au moins un autre montant (3, 4) dépassent du bord inférieur de la paroi latérale (6).
